# DEMANDE DE BREVET EUROPEEN

(11) **EP 4 300 932 A1**
(43) Date de publication de la demande: **03.01.2024**
(21) Numéro de dépôt: 23181200.9
(22) Date de dépôt: 23.06.2023
(51) Int. Cl.: H04M 11/02, H04L 12/28

(54) **TRANSFERT D APPEL PAR DÉTECTION DE PRÉSENCE D'UN TERMINAL DANS UN RÉSEAU LOCAL**

(30) Priorité: 28.06.2022 FR 2206474
(71) Demandeur: Orange, 92130 Issy-les-Moulineaux (FR)
(72) Inventeur: BENDIABDALLAH, Halim, 92210 SAINT CLOUD (FR); QUINSON, Yves, 92326 CHATILLON CEDEX (FR)
(74) Mandataire: Plasseraud IP

(57) **Abrégé**

La présente divulgation concerne une redirection d'un appel entrant, reçu sur une ligne téléphonique (FL) connectée à une passerelle (GW). En particulier, la passerelle anime un réseau local (LAN) et il est déterminé, pour un terminal présent dans le réseau local (SMj), si un numéro d'appel (#SMj) est associé à un identifiant du terminal (@SMj) en vue de rediriger l'appel entrant vers le terminal à partir dudit numéro d'appel (#SMj).

## Description

### Domaine technique

La présente divulgation concerne les technologies mises en oeuvre par des passerelles entre réseau étendu et réseau local, telles que l'accès internet, le réseau wifi, le réseau téléphonique, les applications mobiles, la sécurité informatique.

### Technique antérieure

La présente divulgation s'applique à différents cas d'usage, mais pour sa bonne compréhension, il est pris comme exemple ci-après le cas d'un interphone ayant un module d'accès radio à un réseau cellulaire.

On connait un premier type d'interphone, filaire. Un appui sur un bouton qui pointe sur un domicile particulier lance un appel vers un combiné qui met en relation l'appelant vers le destinataire. Ce dernier peut alors actionner un bouton qui lui permet d'ouvrir la porte à distance.

L'installation de ce type d'interphone reste couteuse car il faut relier électriquement par fil l'interphone au combiné et donc les câbler entre eux via une gaine de câbles généralement cuivrés.

Un deuxième type d'interphone a été proposé plus récemment. Pour éviter le câblage, l'interphone est muni d'un module d'accès radio à un réseau cellulaire ou « modem cellulaire » (GSM, 3G, 4G, ou autre) avec un module de sécurité, tel qu'une carte SIM intégrée, afin d'effectuer un appel vers un numéro de téléphone préenregistré (vers un téléphone fixe ou mobile). Il faut donc au préalable déclarer une liste de numéros de téléphones qui sont successivement appelés si les premiers téléphones de la liste ne décrochent pas l'appel.

Il est constaté toutefois les inconvénients suivants :
- si l'usager du premier numéro de téléphone de la liste n'est pas dans le domicile, il est quand même appelé ;
- si le premier numéro de téléphone est celui d'une ligne de téléphone fixe du domicile, connecté à un répondeur, et que personne n'y est présent ou ne prend l'appel, aucun autre téléphone de la liste n'est notifié de la sonnerie ;
- la succession des appels peut être longue dans le cas où une personne présente au domicile et qui prend l'appel est en fin de liste ;
- il peut arriver accidentellement qu'une personne, absente du domicile et dont le numéro de terminal est en début de liste, prenne l'appel : le terminal d'une personne présente au domicile mais dont le numéro est en fin de liste n'est pas notifié et ne peut donc pas ouvrir efficacement l'accès que contrôle l'interphone.

### Résumé

La présente divulgation vient améliorer la situation.

Il est proposé un procédé de redirection d'un appel entrant, à destination d'un numéro de téléphone associé à une passerelle. Cette passerelle anime un réseau local. Le procédé peut alors comporter :
- Déterminer pour un terminal présent dans le réseau local si un numéro d'appel est associé à un identifiant du terminal en vue de rediriger l'appel entrant vers ledit numéro d'appel.

La passerelle peut être par exemple une passerelle domestique (ou « box ») installée dans un domicile et par exemple un interphone du type précité peut être disposé à une entrée de ce domicile et peut initier l'appel entrant.

Le réseau local précité peut être par exemple un réseau radiofréquence de courte portée, par exemple de type wifi. Ainsi, la passerelle peut identifier les terminaux présents dans le réseau local, et donc dans le domicile précité, et organiser la redirection de l'appel entrant si au moins un de ces terminaux est présent dans le réseau local, d'une part, et identifié comme susceptible de recevoir l'appel, d'autre part.

La détermination du terminal vers lequel rediriger l'appel peut être effectuée par consultation d'une mémoire répertoriant l'identifiant du terminal (par exemple une adresse de ce terminal dans le réseau local) en correspondance d'un numéro d'appel (un numéro MSISDN par exemple).

Le numéro d'appel associé à la passerelle peut être par exemple une ligne téléphonique à laquelle est connecté un téléphone fixe relié à la passerelle. En variante, la passerelle peut être connectée au réseau cellulaire (4G ou 5G) sans nécessairement de ligne fixe, une telle réalisation ne changeant pas le procédé.

Dans une réalisation où le réseau local est un réseau sans fil, la passerelle peut obtenir le ou les identifiants de terminaux présents dans le réseau local, lors de la connexion de ce ou ces terminaux au réseau sans fil.

Ainsi, la passerelle obtient des identifiants d'équipements ou terminaux connectés au réseau local, par exemple les adresses de ces équipements dans le réseau local, et en déduit les identifiants de terminaux qui sont aptes, d'une part, à prendre l'appel entrant et qui sont, d'autre part, présents dans le réseau et donc dans une zone de couverture du réseau local.

En effet, les identifiants des terminaux aptes à prendre l'appel entrant (et non pas tous les équipements connectés au réseau local) peuvent être répertoriés au préalable dans une mémoire, en correspondance de numéros d'appel. Il peut s'agir du numéro d'appel de ce terminal. Il peut également s'agir d'un numéro d'appel d'un autre terminal. Le terminal peut être un objet connecté, associé à cet autre terminal apte à prendre un appel téléphonique. Lorsque cet objet connecté est présent dans le réseau local, l'appel est transmis vers le terminal associé à cet objet. Ainsi, par exemple pour un visiteur du domicile auquel cet objet connecté est confié, les appels sont renvoyés vers le terminal mobile de ce visiteur sans pour autant que son terminal ait accès au réseau local.

Dans un exemple de réalisation, la passerelle peut transmettre l'identifiant du terminal présent à au moins un serveur de redirection d'appels, avec un numéro de terminal initiant l'appel entrant, pour une mise en communication du terminal initiant l'appel entrant avec le numéro d'appel associé à un terminal présent dans le réseau local.

Ainsi, dans une telle réalisation, le serveur de redirection d'appels peut consulter la mémoire précitée et déduire de l'identifiant de terminal reçu le numéro d'appel associé à ce terminal.

Alternativement, à l'utilisation d'un serveur de redirection d'appels, la passerelle peut consulter la mémoire précitée et rediriger elle-même l'appel vers le terminal présent, en particulier si ce terminal est configuré pour passer/recevoir les appels téléphoniques via la passerelle (par exemple en connexion wifi).

Dans une réalisation où une pluralité de terminaux sont répertoriés comme étant associés à la passerelle avec un ordre de priorité de redirection d'appel affecté à chaque terminal, si au moins deux terminaux sont présents dans le réseau local et répertoriés, l'appel peut être redirigé vers le terminal de plus haute priorité, et en cas de non réponse du terminal de plus haute priorité, l'appel peut ensuite être redirigé vers le terminal de priorité inférieure à la plus haute priorité.

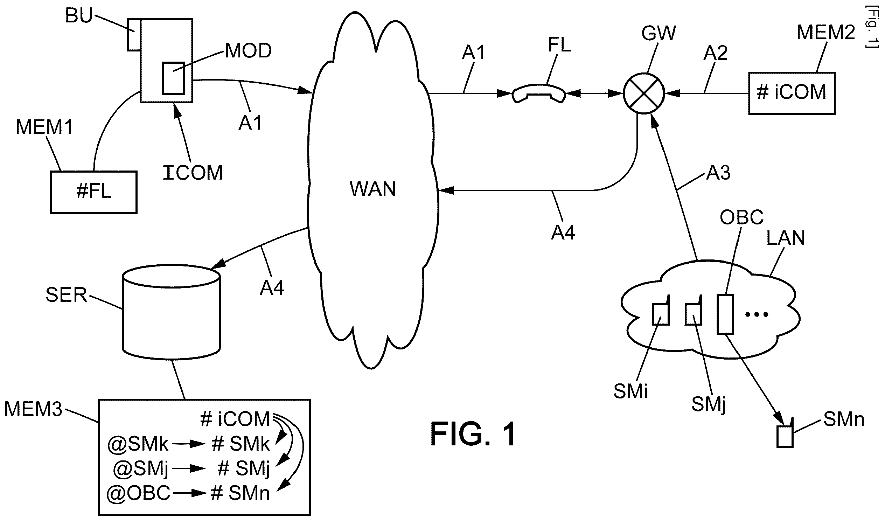

Ainsi, plusieurs terminaux peuvent être identifiés (@SMk, @SMj, @OBC) dans la mémoire précitée (voir l'exemple de la mémoire référencée MEM3 sur la figure 1 décrite en détails plus loin), en correspondance avec un numéro d'appel (#SMk, #SMj, #SMn), et classés dans un ordre de priorité décroissante. Ces priorités peuvent être choisies par exemple par un utilisateur, par exemple lors d'une configuration des équipements intervenant dans cette redirection d'appels (passerelle et/ou serveur de redirection).

Dans un exemple de réalisation, la passerelle peut déterminer le numéro de terminal initiant l'appel entrant, et la redirection de l'appel entrant est déclenchée si le numéro de terminal initiant l'appel entrant correspond à au moins un premier numéro de terminal.

Par exemple, ce premier numéro de terminal peut être stocké dans une mémoire à laquelle accède la passerelle (portant la référence MEM2 sur la figure 1).

Ainsi, la passerelle peut stocker en mémoire ce premier numéro et transmettre l'identifiant du terminal présent au serveur de redirection d'appels si le numéro de terminal initiant l'appel entrant correspond au premier numéro précité.

Par exemple, ce premier numéro de terminal peut être un numéro d'interphone.

En effet, comme indiqué précédemment, un interphone peut être équipé d'un module d'accès radio à un réseau cellulaire et d'un module de sécurité, par exemple une carte SIM (« Subscriber Identification Module ») et être programmé pour appeler la ligne téléphonique à laquelle est connectée la passerelle.

Alternativement, la passerelle peut déterminer au moins un préfixe de numéro de terminal initiant l'appel entrant, et la redirection de l'appel entrant est déclenchée si ce préfixe correspond à au moins un premier préfixe.

Par exemple, ce premier préfixe peut être celui d'un terminal mobile (de type +33-6 ou +33-7 par exemple en France). Une telle réalisation permet à un utilisateur d'un terminal mobile, se trouvant par exemple à proximité du domicile de la passerelle et appelant la ligne de téléphone de ce domicile, de déterminer ainsi si au moins un utilisateur est présent au domicile pour prendre son appel.

Selon un autre aspect, il est proposé un programme informatique comportant des instructions pour la mise en oeuvre de tout ou partie d'un procédé tel que défini dans les présentes lorsque ce programme est exécuté par un processeur. Selon un autre aspect, il est proposé un support d'enregistrement non transitoire, lisible par un ordinateur, sur lequel est enregistré un tel programme.

Selon un autre aspect, il est proposé une passerelle configurée pour la mise en oeuvre du procédé selon les présentes.

Une telle passerelle peut alors être configurée pour animer un réseau local sans fil et déterminer le ou les identifiants de terminaux présents dans le réseau local. La passerelle peut en outre être configurée pour transmettre ce ou ces identifiants de terminaux présents à au moins un serveur de redirection d'appels, avec un numéro de terminal initiant l'appel entrant, pour une mise en communication du terminal initiant l'appel entrant avec au moins un numéro d'appel associé à un des terminaux présents dans le réseau local.

Selon un autre aspect, il est proposé un tel serveur de redirection d'appels, configuré pour :
- recevoir de la passerelle le numéro du terminal initiant l'appel entrant, ainsi que l'identifiant du terminal présent dans le réseau local,
- déterminer un numéro d'appel associé à un terminal présent à partir de l'identifiant de ce terminal présent, et
- mettre en communication le terminal initiant l'appel entrant avec le numéro d'appel.

### Brève description des dessins

D'autres caractéristiques, détails et avantages apparaîtront à la lecture de la description détaillée ci-après, et à l'analyse des dessins annexés, sur lesquels :
**Fig. 1**
   [Fig. 1] montre un exemple d'un système pour la mise en oeuvre d'un procédé défini ci-avant et comprenant par exemple des équipements tels qu'une passerelle et un serveur, tels que définis ci-avant.
**Fig. 2**

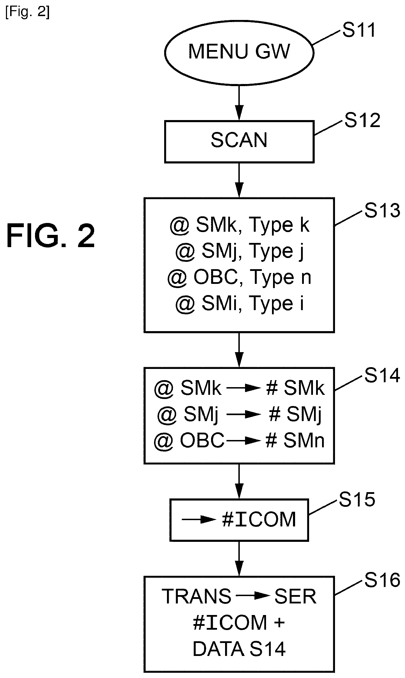

   [Fig. 2] montre des étapes d'une phase de configuration de tels équipements, dans un exemple de procédé du type ci-avant.
**Fig. 3**

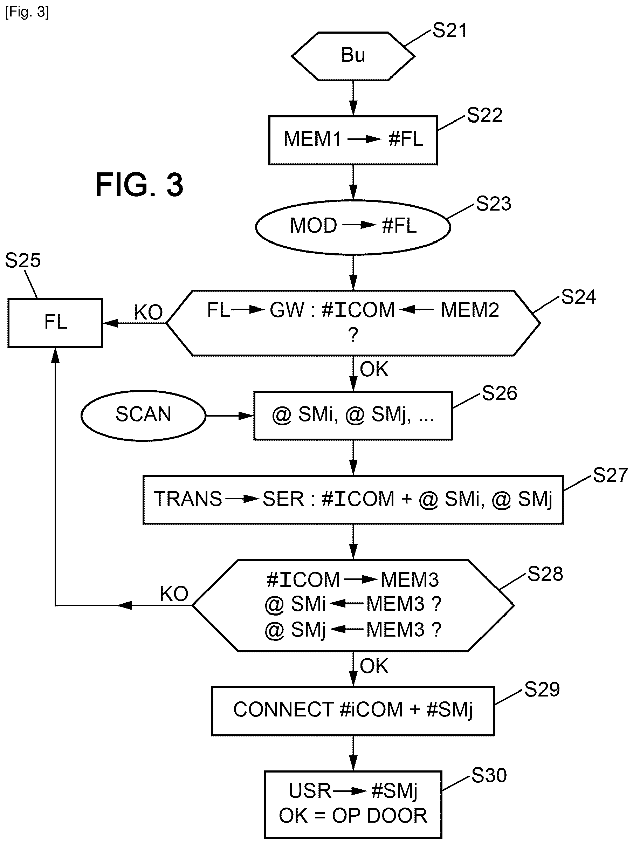

   [Fig. 3] montre des étapes courantes d'un exemple du procédé défini ci-avant.
**Fig. 4**

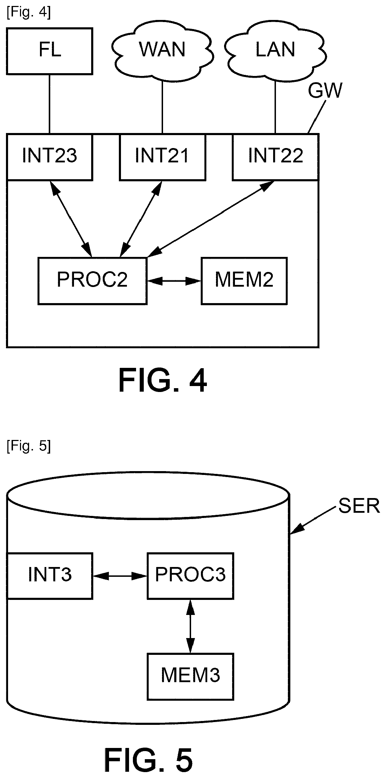

   [Fig. 4] montre un exemple de réalisation d'une passerelle du type défini ci-avant.
**Fig. 5**
   [Fig. 5] montre un exemple de réalisation d'un serveur de redirection d'appels du type défini ci-avant.

### Description des modes de réalisation

Il est présenté sur la figure 1 un exemple de réalisation dans lequel l'appel entrant (flèche A1) est issu d'un interphone ICOM disposant d'un module d'accès radio à un réseau cellulaire (modem) MOD équipé d'un module de sécurité, tel qu'une carte SIM. Cet appel fait suite typiquement à l'appui par un utilisateur sur un bouton d'appel BU que comporte l'interphone ICOM. Par exemple, l'interphone ICOM a accès à une mémoire MEM1 stockant un numéro d'appel d'un téléphone FL de sorte que le modem MOD compose le numéro de ce téléphone FL.

Ce téléphone FL est connecté en particulier à une passerelle GW (typiquement une passerelle domestique entre un réseau étendu WAN (pour « Wide Area Network ») et un réseau local LAN (pour « Local Area Network »). Le numéro de ce téléphone est associé à la passerelle. Le réseau local LAN peut comporter un réseau radiofréquence de courte portée de type wifi. En particulier, la passerelle GW anime ce réseau local LAN. Ainsi, la passerelle GW est capable de déterminer les équipements SMi, SMj, etc., qui y sont connectés (flèche A3), et donc présents dans le domicile dans lequel la passerelle GW est disposée. Par exemple, la passerelle GW peut relever des identifiants de ces équipements, tels que les adresses MAC (pour « Medium Access Control ») de ces équipements dans le réseau @SMi, @SMj, etc.

La présence d'un terminal dans le réseau local peut être détectée par la connexion d'un équipement SMᵢ qui est associé à ce terminal. Dans ce cas, la présence du terminal au sein du réseau local est détectée du fait de la présence de l'équipement qui lui est associé.

Ainsi, sur réception de l'appel entrant A1 issu de l'interphone ICOM, la passerelle GW consulte une mémoire MEM2 pour déterminer si le numéro du terminal qui initie l'appel entrant (A1) est répertorié dans cette mémoire MEM2. Si tel est le cas, la passerelle GW récupère le numéro #ICOM du terminal initiant l'appel entrant (flèche A2) et transmet ce numéro avec des identifiants des équipements qui sont présents dans le réseau local SMi, SMj, etc. (flèche A4), à un serveur SER, via le réseau étendu WAN.

Dans cet exemple de réalisation, le serveur SER est un serveur de redirection d'appels qui peut accéder à une mémoire MEM3, sur réception du numéro de l'interphone #ICOM et des identifiants @SMi, @SMj des équipements présents dans le réseau local LAN (flèche A4 en bas à gauche de la figure 1). Cette mémoire MEM3 peut stocker par exemple une base de données qui répertorie :
- des identifiants d'équipements @SMk, @SMj, @OBC, qui ont précédemment été déclarés par un utilisateur de la passerelle GW par exemple en tant que terminaux mobiles susceptibles de prendre un appel issu de l'interphone ICOM (comme par exemple des terminaux mobiles à disposition d'adultes capables de vérifier si la personne qui sonne à l'interphone peut être admise dans le domicile), ou encore en tant qu'objets connectés déclarés dans une mémoire comme étant associés à des terminaux mobiles susceptibles de prendre cet appel,
- en correspondance de numéros d'appel respectifs de ces terminaux mobiles : #SMk, #SMj, #SMn, etc. qui peuvent être typiquement des numéros MSISDN (pour « Mobile Station International Subscriber Directory Number »).

Ainsi, le serveur SER peut être configuré pour rediriger l'appel initié par l'interphone ICOM d'abord vers le premier numéro d'appel associé au terminal SMk si ce dernier est présent dans le domicile (directement détecté comme connecté au réseau local ou si un équipement qui lui est associé est connecté au réseau local) et sinon rediriger l'appel vers le deuxième numéro d'appel associé au terminal SMj de la liste stockée dans la mémoire MEM3 si ce dernier est bien détecté comme présent dans le domicile, etc.

Dans l'exemple de la figure 1 le terminal SMk n'est pas repéré parmi les équipements présents dans le domicile et l'appel est alors redirigé vers le terminal SMj. Ainsi, l'interphone ICOM est mis en relation avec le terminal SMj. Si ce terminal SMj ne répond pas, l'appel peut être redirigé vers le terminal suivant SMn de la mémoire MEM3, pour autant que ce terminal SMn (ou encore un objet connecté OBC auquel ce terminal SMn est associé, comme illustré dans l'exemple de la figure 1) soit nouvellement détecté dans le réseau local LAN.

Ainsi, si l'utilisateur du terminal mobile principal SMk n'est pas présent dans le domicile, l'appel est renvoyé sur le terminal mobile suivant SMj de la liste de la mémoire MEM3, qui se trouve être présent dans le domicile.

On peut relever dans l'exemple de la figure 1 que l'équipement SMi, bien qu'il soit parmi les équipements présents dans le réseau local, n'a pas été déclaré dans la mémoire MEM3 comme étant susceptible de recevoir un appel. Il peut s'agir d'un équipement tel qu'une imprimante connectée, une télévision connectée ou autre, ou encore d'un terminal mobile capable de prendre un appel mais qui est à disposition d'une personne non habilitée telle qu'un enfant par exemple.

On peut également relever dans l'exemple de la figure 1 que l'équipement OBC est un des équipements présents dans le réseau local et a été déclaré dans la mémoire MEM3 comme étant associé à un terminal SMn susceptible de recevoir un appel. Il peut s'agir d'un équipement tel qu'un objet connecté dont le seul rôle est de se connecter au réseau local afin de permettre de détecter la présence d'un terminal dans la zone de couverture de la passerelle d'accès.

Ainsi, grâce à cette mise en oeuvre, il est possible de détecter le ou les utilisateurs présents dans le domicile et capables de prendre la communication avec l'interphone et ainsi de rediriger l'appel de l'interphone vers un terminal d'un tel utilisateur habilité à prendre cet appel.

Bien entendu, une telle réalisation suppose que le ou les utilisateurs des terminaux mobiles se connectent en priorité au réseau wifi, lorsqu'ils se trouvent à leur domicile typiquement, ce qui est très souvent le cas pour éviter une consommation de communications de données via le réseau cellulaire.

En outre, le téléphone fixe FL et/ou la passerelle GW peuvent être configurés pour ne pas laisser un répondeur du téléphone fixe se déclencher lorsque l'appel entrant est identifié comme étant initié par le numéro de l'interphone #ICOM.

Alternativement ou en complément de la déclaration d'une liste hiérarchisée à stocker dans la mémoire MEM3, il est possible de sélectionner en priorité les équipements connectés qui ont le plus fort signal radiofréquence avec la passerelle (« RSSI » pour « Received Signal Strength Indication »). Une telle réalisation peut être avantageuse notamment dans le cas d'un domicile dans une résidence, le terminal d'un utilisateur pouvant être détecté alors que l'utilisateur n'est pas nécessairement dans le domicile-même mais dans la zone de couverture radio de la passerelle d'accès.

En outre, alternativement à l'intervention d'un serveur de redirection SER, la passerelle GW peut accéder directement à la mémoire MEM3 (ou à un contenu équivalent). En effet, dans le cas où l'un au moins des utilisateurs des terminaux SMk, SMj, SMn, a configuré son terminal pour autoriser la réception d'appels en wifi, la passerelle GW peut alors réacheminer ou rerouter l'appel entrant vers ce terminal dès lors qu'il est connecté au réseau wifi qu'anime la passerelle, directement et sans passer par un serveur de redirection d'appels.

Dans le cas où un serveur de redirection d'appels SER est utilisé, la base de données présentant les numéros d'interphone #ICOM, en correspondance des adresses MAC ou IP des terminaux à contacter @SMk, etc., et d'un numéro d'appel associé #SMk, etc., peut être stockée dans une mémoire MEM3 intégrée au serveur ou dans une mémoire d'un serveur distant, auquel le serveur de redirection d'appel SER est connecté.

En outre, alternativement à un contenu de la mémoire MEM2 stockant un numéro d'interphone, il peut être prévu plus généralement de stocker simplement une forme de préfixe de numéro de terminal initiant l'appel entrant. Ce préfixe peut être par exemple celui d'un terminal mobile (par exemple +33-6 ou +33-7 en France). Ainsi, dans une telle réalisation, un utilisateur d'un terminal mobile passant par exemple à proximité du domicile d'un utilisateur du téléphone fixe FL relié à la passerelle GW, peut essayer de déterminer si au moins un utilisateur du téléphone fixe FL est à son domicile et appeler ce téléphone fixe. La passerelle GW peut alors déterminer (avec par exemple l'appui du serveur SER) si au moins un terminal mobile SMk, SMj, etc., susceptible de prendre l'appel est dans le domicile pour mettre en relation un occupant du domicile avec la personne initiant l'appel, si l'appel est issu d'un terminal mobile exclusivement. En revanche, si le numéro du terminal initiant l'appel entrant a un préfixe différent de celui d'un terminal mobile, alors l'appel peut être naturellement reçu par le téléphone fixe FL (puis éventuellement être accueilli par son répondeur). Une telle réalisation permet de contribuer au filtrage d'appels qui peuvent être issus de plateformes d'appels publicitaires et ne sont en général pas initiés par des terminaux mobiles. Par ailleurs, lorsqu'une personne dispose dans ses contacts du numéro de mobile et du numéro de fixe pour un même contact et qu'elle choisit d'appeler le numéro de fixe, il peut être présumé que cette personne cherche à joindre un correspondant quelconque, présent dans le domicile du contact. L'adaptation du mode de réalisation présenté sur la figure 1 en remplaçant le numéro #ICOM de la mémoire MEM2 par un simple préfixe de numéro (comme un préfixe de numéro de terminal) permet d'offrir un tel service. Par ailleurs, dans le cas où l'appel aboutit finalement sur un répondeur du téléphone fixe FL, l'appelant peut en déduire que personne n'est présent au domicile pour prendre son appel.

On décrit ci-après en référence à la figure 2 une phase préalable de configuration des équipements intervenant dans la mise en oeuvre de la réalisation présentée sur la figure 1 dans un mode de réalisation particulier.

À l'étape S11, un utilisateur peut accéder, avec l'interface homme machine de l'un de ses terminaux connectés à la passerelle GW, à un menu de configuration de la passerelle GW. En sélectionnant une page spécifique du menu, l'utilisateur peut par exemple déclarer à la passerelle GW les numéros des terminaux mobiles à contacter dans le cas de la réception d'un appel issu de l'interphone ICOM. Préalablement, l'utilisateur connecte au réseau wifi local LAN tous les équipements pour lesquels un terminal mobile est susceptible de recevoir l'appel de l'interphone. A l'étape S12 de scan de la passerelle des équipements connectés au réseau wifi, la passerelle GW peut identifier tous les équipements connectés. Il peut alors être affiché sur l'interface homme machine précitée, une page présentant à l'étape S13 :
- toutes les adresses MAC d'équipements connectés @SMk, @SMj, @OBC, @SMi, etc.,
- en correspondance du type de chaque équipement connecté Type k, Type j, Type n, Type i, etc.

Dans un tel menu, une passerelle peut en général indiquer pour chaque équipement au moins la marque, le modèle et en outre pour certains au moins des terminaux mobiles, leur identifiant de compte marque (par exemple « Iphone^{®} de Michel »). Ainsi, l'utilisateur peut déterminer au moins le type d'équipement d'après les informations données par la passerelle.

L'utilisateur peut entrer ensuite, à l'étape S14, via l'interface homme machine précitée, pour chaque adresse MAC d'équipement connecté un numéro d'appel associé #SMk, #SMj, #SMn, susceptible de prendre un appel de l'interphone. A l'étape S15, l'utilisateur déclare aussi le numéro d'appel de l'interphone #ICOM. L'utilisateur peut en outre assigner à chaque numéro d'appel des priorités respectives de transfert de l'appel issu de l'interphone : par exemple transférer d'abord l'appel vers le numéro d'appel associé au mobile SMk, puis vers le numéro d'appel du mobile SMj si le numéro d'appel du mobile SMk ne répond pas, puis vers le numéro d'appel du mobile SMn, etc. L'utilisateur peut en outre supprimer des équipements (par exemple l'équipement SMi). Il peut en outre choisir la suppression d'une option consistant à rediriger l'appel entrant vers le téléphone fixe FL, si aucun des numéros d'appels des terminaux déclarés SMk, SMj, SMn ne répond à l'appel, pour éviter par exemple que des enfants présents dans le domicile ne prennent l'appel.

La passerelle GW enregistre le numéro d'appel de l'interphone #ICOM dans sa mémoire MEM2. L'ensemble de ces données (#ICOM et @SMk, @SMj, @OBC en correspondance avec #SMk, #SMj, #SMn) est ensuite transmis au serveur de redirection d'appels SER, à l'étape S16, pour y être stocké dans la mémoire MEM3.

Il est également possible pour l'utilisateur d'accéder au menu de configuration de la passerelle GW afin de modifier un numéro d'appel associé à un équipement du réseau local, par exemple celui associé à @OBC.

On se réfère maintenant à la figure 3 pour décrire les étapes courantes mises en oeuvre dans le cas d'un appel entrant issu de l'interphone ICOM. A l'étape S21, un utilisateur presse le bouton BU de l'interphone, ce qui provoque à l'étape S22 une lecture mémoire du numéro de ligne fixe FL à laquelle est connectée la passerelle GW (dans la mémoire MEM1 de l'interphone comme illustré sur la figure 1). Le modem MOD de l'interphone compose alors le numéro de ligne fixe #FL à l'étape S23 et, à l'étape S24, l'appel issu de l'interphone est traité par la passerelle GW. Cette dernière GW détermine si le numéro d'appel entrant #ICOM a bien été enregistré au préalable dans la mémoire MEM2, comme étant le numéro d'appel de l'interphone ICOM.

Si tel n'est pas le cas (flèche KO en sortie du test S24), alors l'appel est pris par le téléphone fixe FL connecté à la passerelle GW et éventuellement dirigé vers un répondeur (étape S25).

Si tel est le cas (flèche OK en sortie du test S24), alors la passerelle :
- empêche que l'appel soit dirigé vers le téléphone fixe à laquelle elle est connectée et que le répondeur ne s'enclenche,
- récupère les identifiants des équipements connectés à son réseau local (tels que les adresses MAC de ces équipements), à l'étape S26, et
- transmet au serveur SER de redirection d'appels, à l'étape S27, les identifiants des équipements présents dans le réseau local @SMi, @SMj, @OBC avec le numéro de l'interphone initiant l'appel #ICOM.

À l'étape S28, le serveur SER lit par exemple le numéro du terminal appelant #ICOM et lit dans la mémoire MEM3, les identifiants des équipements présents dans le réseau local @SMk, @SMj, @OBC. Le serveur SER peut ainsi déterminer si au moins un des identifiants reçus de la passerelle @SMi, @SMj, correspond à l'un de ces identifiants préenregistrés @SMk, @SMj, @OBC (en l'occurrence ici, l'identifiant @SMj). Si tel n'est pas le cas (flèche KO en sortie du test S28), le serveur SER ne peut pas rediriger l'appel et peut transmettre un message d'échec à la passerelle qui achemine ou route finalement l'appel vers la ligne fixe FL (étape S25). Si tel est le cas en revanche (flèche OK en sortie du test S28), alors le serveur de redirection d'appels peut mettre en communication l'interphone ICOM avec le premier terminal SMj :
- qui répond à l'appel,
- qui est présent dans le réseau local LAN et
- dont le numéro (#SMj) est répertorié dans la mémoire MEM3 à laquelle accède le serveur SER.

Par exemple, le serveur SER peut utiliser l'identifiant d'équipement @SMj qu'il reçoit de la passerelle GW, pour retrouver, en correspondance de cet identifiant @SMj dans la mémoire MEM3, le numéro d'appel #SMj associé et utiliser ce numéro d'appel #SMj pour sa mise en communication avec l'interphone ICOM, à l'étape S29.

Ensuite, pendant cette communication, l'utilisateur du terminal appelé peut utiliser une interface de son terminal pour cliquer sur un bouton qui permet d'ouvrir par exemple une porte d'accès vers son domicile, à la manière d'un interphone classique, à l'étape S30.

On a illustré sur la figure 4, à titre d'exemple, la structure d'une passerelle GW pour la mise en oeuvre du procédé ci-avant. La passerelle GW peut comporter typiquement :
- une interface INT21, de communication avec le réseau étendu WAN, notamment pour la prise d'appels extérieurs et/ou pour la communication avec le serveur SER,
- une interface INT22, de communication avec le réseau local LAN, par radiofréquences, de type wifi, typiquement,
- une interface INT23, de communication avec un téléphone fixe FL relié à la ligne fixe à laquelle est connectée la passerelle GW (typiquement via un câble RJ45),
- une mémoire MEM2 stockant au moins le numéro de l'interphone #ICOM, ainsi que des codes d'instructions d'un programme informatique pour la mise en oeuvre du procédé ci-avant, et
- un processeur PROC2 capable de coopérer avec la mémoire MEM2 pour lire ces instructions et exécuter le programme informatique précité conformément au procédé ci-avant.

On a illustré sur la figure 5, à titre d'exemple, la structure d'un serveur de redirection d'appels SER qui peut comporter typiquement :
- une interface INT3, de communication avec le réseau étendu WAN, notamment pour la communication avec la passerelle GW,
- une mémoire MEM3 stockant au moins les données reçues de la passerelle à l'étape S16, ainsi que des codes d'instructions d'un programme informatique pour la mise en oeuvre du procédé ci-avant lorsque le serveur SER intervient dans des étapes particulières de ce procédé, et
- un processeur PROC3 capable de coopérer avec la mémoire MEM3 pour lire ces instructions et exécuter le programme informatique précité conformément au procédé présenté ci-avant.

## Revendications

1. Procédé de redirection d'un appel entrant, à destination d'un numéro de téléphone associé à une passerelle (GW), dans lequel la passerelle anime un réseau local (LAN), le procédé comportant :
- Déterminer (S28) pour un terminal présent dans le réseau local (SMj) si un numéro d'appel (#SMj) est associé à un identifiant du terminal (@SMj) en vue de rediriger l'appel entrant vers ledit numéro d'appel (#SMj).

2. Procédé selon la revendication 1, dans lequel le réseau local est un réseau sans fil (LAN) et la passerelle obtient l'identifiant de terminal présent dans le réseau local lors de la connexion du terminal au réseau sans fil.

3. Procédé selon l'une des revendications précédentes, dans lequel :
- la passerelle transmet l'identifiant du terminal présent (S27) à au moins un serveur de redirection d'appels (SER), avec un numéro de terminal initiant l'appel entrant (#ICOM), pour une mise en communication (S29) du terminal initiant l'appel entrant avec le numéro d'appel.

4. Procédé selon l'une des revendications précédentes, dans lequel, une pluralité de terminaux étant répertoriés comme étant associés à ladite passerelle avec un ordre de priorité de redirection d'appel affecté à chaque terminal (MEM3), si au moins deux terminaux sont présents dans le réseau local et répertoriés, l'appel est redirigé vers le numéro d'appel de plus haute priorité, et en cas de non réponse, l'appel est redirigé vers le numéro d'appel de priorité inférieure à la plus haute priorité.

5. Procédé selon l'une des revendications précédentes, dans lequel la passerelle détermine le numéro de terminal initiant l'appel entrant (#ICOM), et la redirection de l'appel entrant est déclenchée si le numéro de terminal initiant l'appel entrant correspond à au moins un premier numéro de terminal (S24).

6. Procédé selon la revendication 5, prise en combinaison avec la revendication 3, dans lequel la passerelle stocke en mémoire ledit premier numéro (S15, S22) et transmet (S27) l'identifiant du terminal présent au serveur de redirection d'appels si (S24) le numéro de terminal initiant l'appel entrant correspond au premier numéro.

7. Procédé selon l'une des revendications précédentes, dans lequel la passerelle (GW) détermine au moins un préfixe de numéro de terminal initiant l'appel entrant, et la redirection de l'appel entrant est déclenchée si ledit préfixe correspond à au moins un premier préfixe.

8. Programme informatique comportant des instructions pour la mise en oeuvre du procédé selon l'une des revendications précédentes, lorsqu'elles sont exécutées par un processeur.

9. Passerelle configurée pour la mise en oeuvre du procédé selon l'une des revendications 1 à 7.

10. Passerelle selon la revendication 9, configurée pour animer un réseau local sans fil et déterminer le ou les identifiants de terminaux présents dans le réseau local, la passerelle étant en outre configurée pour transmettre le ou les identifiants de terminaux présents à au moins un serveur de redirection d'appels, avec un numéro de terminal initiant l'appel entrant, pour une mise en communication du terminal initiant l'appel entrant avec au moins un numéro d'appel associé à un des terminaux présents dans le réseau local.

11. Serveur de redirection d'appels, configuré pour la mise en oeuvre du procédé selon la revendication 3 et pour :
- recevoir de la passerelle le numéro du terminal initiant l'appel entrant, ainsi que l'identifiant du terminal présent dans le réseau local,
- déterminer un numéro d'appel associé à un terminal présent à partir de l'identifiant de ce terminal présent, et
- mettre en communication le terminal initiant l'appel entrant avec le numéro d'appel.
